(19) Europäisches Patentamt

European Patent Office

Office européen des brevets

(11) EP 1 641 019 A1

(12) **EUROPEAN PATENT APPLICATION**

(43) Date of publication:
29.03.2006 Bulletin 2006/13

(51) Int Cl.:
*H01J 29/70* (2006.01) *H01J 29/76* (2006.01)
*H04N 9/28* (2006.01)

(21) Application number: 05255303.9

(22) Date of filing: 30.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 01.09.2004 JP 2004254534

(71) Applicant: Matsushita Toshiba Picture Display
Co., Ltd.
Takatsuki-shi,
Osaka 569-1193 (JP)

(72) Inventors:
• **Tagami, Etsuji**
Takatsuki-shi
Osaka 569-0087 (JP)
• **Sakurai, Hiroshi**
Takatsuki-shi
Osaka 569-0803 (JP)

(74) Representative: **Tothill, John Paul**
Frank B. Dehn & Co.
179 Queen Victoria Street
London EC4V 4EL (GB)

(54) **Color picture tube apparatus**

(57) A pair of coma aberration correction coils (12) and a pair of YH correction coils (13) are placed in upper and lower portions on an electron gun side from a ferrite core (9), and a pair of vertical auxiliary coils (14) generating a magnetic field in the same direction as that of a vertical deflection magnetic field are placed in right and left portions on the electron gun side from the ferrite core (9). A horizontal deflection coil (6) has a first coil (61) and a second coil (62) on an inner circumferential side of the first coil (61). A useful portion (62b) of the second coil (62) is placed in a range of $\pm45°$ from a vertical axis with respect to a tube axis, and a bend portion (62a) of the second coil (62) is placed on the electron gun side from a position that is away from the end on a screen side of the ferrite core (9) to the screen side by 10 mm. Because of this, the misconvergence of PQH can be suppressed without increasing cost and power consumption with a simple configuration.

FIG. 4

EP 1 641 019 A1

**Description**

The present invention relates to a color picture tube apparatus used in a television, a computer display, or the like.

In a color picture tube apparatus having an in-line type electron gun, as means for converging three electron beams emitted from the electron gun over an entire region of a screen, a self-convergence system is generally used, which allows a deflection magnetic field to have a distribution. Specifically, the self-convergence system allows a horizontal deflection magnetic field to have a pincushion shape magnetic field distribution in which the intensity of a magnetic field increases as the deflection amount in a horizontal direction increases, and allows a vertical defection magnetic field to have a barrel shape magnetic field distribution in which the intensity of a magnetic field decreases as the deflection amount in a vertical direction increases. In such a self-convergence system, due to the fact that mainly a horizontal deflection magnetic field is of a pincushion shape, the shape of an electron beam spot is distorted on the periphery of the screen, which degrades the resolution.

In contrast, JP 2003-297261 A discloses a color picture tube apparatus in which the distortion of the shape of an electron beam spot is suppressed with a relatively simple configuration, whereby the resolution is enhanced. The summary thereof will be described below.

In the above-mentioned color picture tube apparatus, a horizontal deflection magnetic field is set to be a substantially uniform magnetic field; in a tube axis direction, at a position of an end on an electron gun side of a ferrite core of a deflection yoke, three electron beam tracks respectively are set to be substantially parallel to a tube axis; and a coil that generates a quadrupole magnetic field having a horizontal focusing action of focusing the three electron beams in a horizontal direction is placed in a region from the end of the ferrite core on the electron gun side to a phosphor screen.

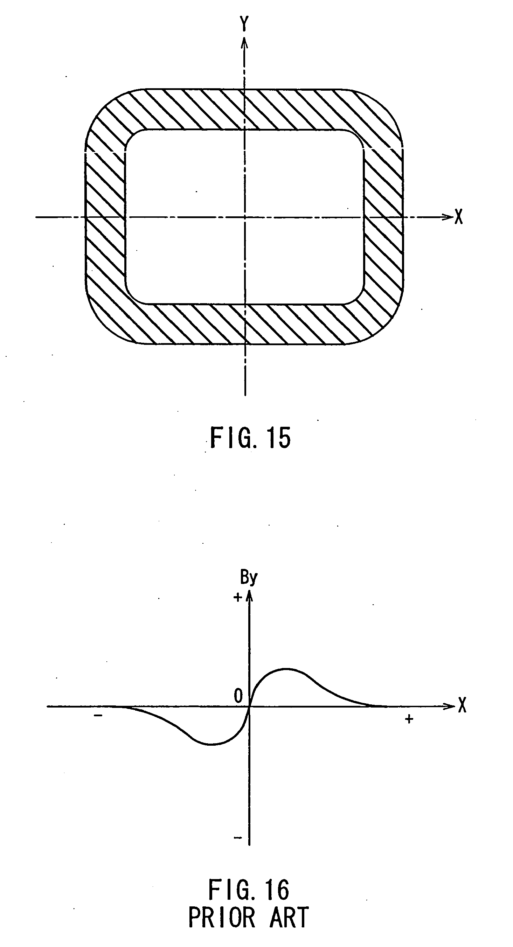

According to such a configuration, the distortion of the shape of a beam spot can be suppressed by the substantially uniform horizontal deflection magnetic field. Furthermore, the magnetic flux density $By$ of a vertical component of the quadrupole magnetic field generated by the coil has a horizontal distribution in which the magnetic flux density $By$ gradually weakens from a center portion to both outer sides in the horizontal direction, as shown in FIG. 16, whereby three electron beams can be converged over an entire region of the phosphor screen. Compared with a dynamic convergence technique using an auxiliary coil for generating a magnetic field whose intensity changes in synchronization with a horizontal deflection period under a uniform horizontal deflection magnetic field, described in JP 2001-43815 A, the above-mentioned configuration does not use a horizontal deflection current waveform with a high frequency, so that convergence can be realized with a simple circuit configuration.

As described above, in the color picture tube apparatus in JP 2003-297261 A, the distortion of the shape of a beam spot can be suppressed by the substantially uniform horizontal deflection magnetic field, and the resolution in the horizontal direction can be enhanced. Furthermore, the above-mentioned quadrupole magnetic field has a function of a magnetic field lens, and it is advantageous for a resolution to place the magnetic field lens at a position closer to the phosphor screen, because the magnification of the magnetic field lens can be decreased.

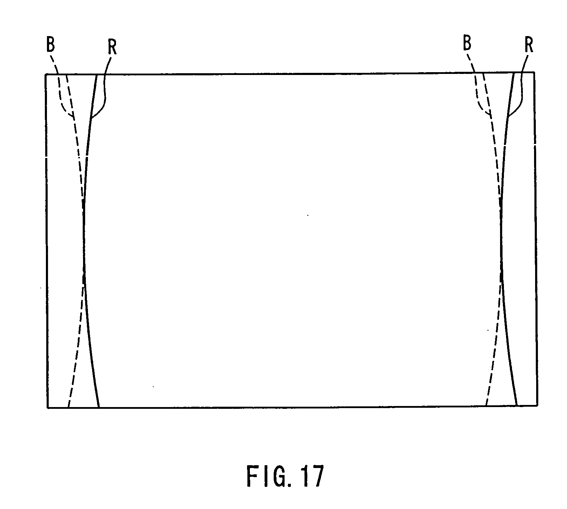

However, as described in JP 2003-297261 A, in the case of designing a system in which a quadrupole magnetic field is added to a substantially uniform horizontal deflection magnetic field, when an attempt is made to optimize the pincushion distortion of rasters in upper and lower portions simply by increasing the intensity of the quadrupole magnetic field, as a side effect of the quadrupole magnetic field with respect to the convergence, misconvergence called PQH occurs, which shows a pattern with a vertical line of R (red) shifted to the right side with respect to a vertical line of B (blue) at corner portions of rasters as shown in FIG. 17

It is difficult to optimize the PQH misconvergence merely by changing the winding distribution of a horizontal deflection coil and a vertical deflection coil, and in order to address this problem, various correction means have been proposed. For example, a method for providing a correction circuit using a saturable reactor (JP 2001-23541 A), a method for using an auxiliary coil (JP 7(1995)-31989 B), and a method for correcting an electron beam track using a magnet (JP 10(1998)-241602 A) have been proposed.

However, when the PQH is corrected by the methods described in JP 2001-23541 A and JP 7(1995)-31989 B, it is necessary to provide a correction circuit and a correction coil. Therefore, there arise problems such as the increase in cost, the increase in power consumption ascribed to the correction circuit, and the increase in complexity of a circuit configuration. Furthermore, when the PQH is corrected by the method described in JP 10(1998)-241602 A, it is necessary to provide a correction magnet. Therefore, there arise problems that cost increases similarly, and vertical line misconvergence XH on a horizontal axis newly occurs.

Therefore, with the foregoing in mind, it is an object of the present invention to provide an inexpensive color picture tube apparatus having excellent focus performance and convergence performance by suppressing PQH misconvergence, which becomes a problem for putting the technique of suppressing the distortion of the shape of an electron beam spot into practical use with a simple configuration described in JP 2003-297261 A, with a simple configuration without increasing cost and power consumption.

A color picture tube apparatus of the present invention includes a color picture tube having an envelope composed of a front panel in which a phosphor screen is formed on an inner surface and a funnel, an electron gun provided in a neck of the funnel, and a deflection yoke mounted on an outer circumferential surface of the funnel, for applying a horizontal deflection magnetic field and a vertical deflection magnetic field to three electron beams emitted in an in-line shape from the electron gun to deflect the three electron beams in horizontal and vertical directions.

The deflection yoke includes a ferrite core, a horizontal deflection coil for generating the horizontal deflection magnetic field, a vertical deflection coil for generating the vertical deflection magnetic field, and an insulating frame for insulating the horizontal deflection coil from the vertical deflection coil. The horizontal deflection magnetic field has a substantially uniform magnetic field distribution,

Tracks of the three electron beams are substantially parallel to a tube axis at a position of an end of the ferrite core on an electron gun side in a tube axis direction.

A quadrupole magnetic field generator for generating a quadrupole magnetic field that acts on the three electron beams is provided in a region from a vicinity of the end of the ferrite core on the electron gun side to the phosphor screen. The quadrupole magnetic field has a horizontal focusing action of focusing the three electron beams in a horizontal direction even in a case where the three electron beams reach any place of the phosphor screen, and has a magnetic field distribution in which the horizontal focusing action gradually weakens as the three electron beams are deflected from a center to an outer circumferential end of the phosphor screen in the horizontal direction.

A pair of coma aberration correction coils for correcting coma aberration, a pair of YH correction coils for correcting YH, and a pair of magnetic substance cores around which the coma aberration correction coils and the YH correction coils are wound are placed at a position on the electron gun side from the ferrite core in the tube axis direction and sandwich the neck in the vertical direction.

A pair of vertical auxiliary coils for generating a magnetic field in the same direction as that of the vertical deflection magnetic field are placed at a position on the electron gun side from the ferrite core in the tube axis direction and sandwich the neck in the horizontal direction.

The horizontal deflection coil includes a first coil, and a second coil composed of a winding placed on an inner circumferential side from a winding of the first coil and having a useful portion that contributes to deflection in a range of $\pm 45°$ from a vertical axis with respect to the tube axis.

A large-diameter side bend portion of the second coil that traverses the vertical axis is placed on the electron gun side from a position that is away from the end on the phosphor screen side of the ferrite core to the phosphor screen side by 10 mm in the tube axis direction.

The first coil and the second coil are connected in series with each other, and horizontal deflection currents in the same direction seen along the tube axis flow in a bend portion of the first coil and the bend portion of the second coil.

Preferred embodiments will now be described, by way of example only, and with reference to the accompanying drawings, in which:

FIG. 1 is a external appearance view of a color picture tube apparatus according to one embodiment of the present invention.

FIG. 2 is a schematic perspective view of a deflection yoke to be mounted on the color picture tube apparatus according to one embodiment of the present invention.

FIG. 3 is a rear view of a deflection yoke to be mounted on the color picture tube apparatus according to one embodiment of the present invention.

FIG. 4 is partial cross-sectional view taken along a vertical plane passing through a tube axis of a deflection yoke to be mounted on a color picture tube apparatus according to one example of the present invention.

FIG. 5 is a cross-sectional view of the deflection yoke taken along a line V-V at a position of Z = -35 mm in FIG. 4.

FIG. 6 is a cross-sectional view of the deflection yoke taken along a line VI-VI at a position of Z = +5 mm in FIG. 4.

FIG. 7 is a circuit diagram of a vertical deflection coil, a coma aberration correction coil, a YH correction coil, and a vertical auxiliary coil in the color picture tube apparatus according to one embodiment of the present invention.

FIG. 8 shows a misconvergence pattern (coma aberration in a vertical direction) of VCR.

FIG. 9 shows a misconvergence pattern of YH.

FIG. 10 shows pincushion distortion of rasters in upper and lower portions.

FIG. 11 illustrates the principle in which pincushion distortion of rasters in upper and lower portions is corrected by a vertical preliminary deflection magnetic field.

FIG. 12A is a plan view showing a winding arrangement of a horizontal deflection coil of a deflection yoke to be mounted on the color picture tube apparatus according to one embodiment of the present invention, and FIG. 12B is a front view thereof.

FIG. 13 illustrates the principle in which a useful portion of a second coil of the horizontal deflection coil corrects the misconvergence of PQH in the color picture tube apparatus according to one embodiment of the present invention.

FIG. 14 is an XY cross-sectional view of a ferrite core of a deflection yoke to be mounted on the color picture tube apparatus according to one embodiment of the present invention.

FIG. 15 is an XY cross-sectional view of an angular core.

FIG. 16 shows a horizontal distribution of a magnetic flux density of a vertical component of a quadrupole magnetic field generated by a coil mounted on a conventional color picture tube apparatus.

FIG. 17 shows a misconvergence pattern of PQH (red is shifted to the right side).

According to the present invention, in a color picture tube apparatus in which a quadrupole magnetic field is added to a substantially uniform horizontal deflection magnetic field, the misconvergence of PQH can be corrected without increasing cost and power consumption, and without increasing the pincushion distortion of rasters in upper and lower portions, which have a complementary relationship with the misconvergence of PQH. Hence a high-resolution color picture tube apparatus having excellent focus performance and convergence can be realized with a relatively simple configuration.

Hereinafter, preferred embodiments of the present invention will be described in detail, exemplifying a color picture tube apparatus having a flat screen with a diagonal screen size of 86 cm, an aspect ratio of 16 : 9, and a deflection angle of 102° as one example.

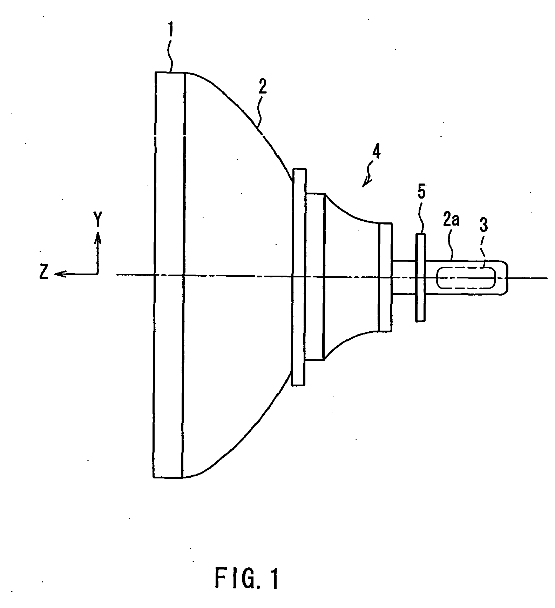

FIG. 1 is an external appearance view of a color picture tube apparatus according to one embodiment of the present invention.

The color picture tube apparatus includes a color picture tube that includes an envelope composed of a front panel 1 in which a phosphor screen (not shown) is formed on an inner surface and a funnel 2, an electron gun 3 provided in a neck 2a of the funnel 2, a deflection yoke 4 mounted on an outer circumferential surface of the funnel 2, and a convergence yoke 5. The electron gun 3 includes three cathodes placed in an in-line configuration in a horizontal direction, and emits three electron beams corresponding to three colors: red (R), green (G), and blue (B).

For convenience of the following description, an XYZ rectangular coordinate system is set in which a tube axis is a Z-axis, a horizontal axis orthogonal to the Z-axis is an X-axis, and a vertical axis orthogonal to the X-axis and the Z-axis is a Y-axis. It is assumed that the position of a reference line (RL) of the color picture tube apparatus is an origin of the Z-axis (position of Z = 0), and a phosphor screen side is a positive side of the Z-axis. Herein, the reference line is a virtual reference line perpendicular to the Z-axis, and the position thereof on the Z-axis is matched with a geometric deflection center position of the color picture tube apparatus. Furthermore, when the color picture tube apparatus is seen from the phosphor screen side, the right side is assumed to be a positive side of the X-axis, and the upper side is assumed to be a positive side of the Y-axis.

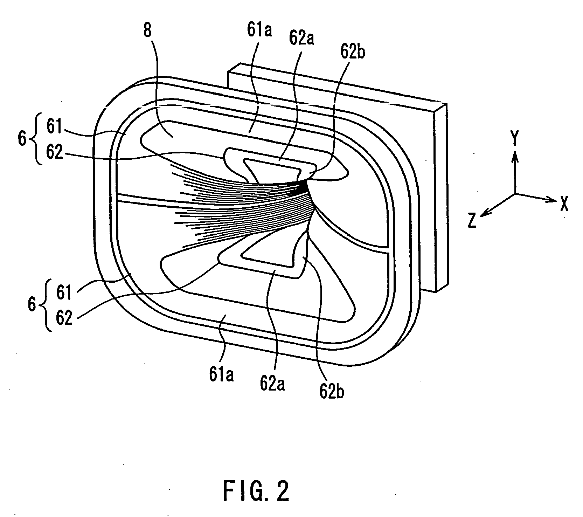

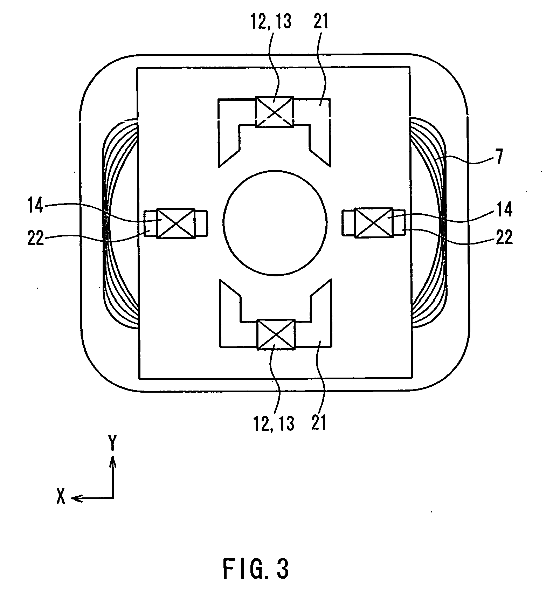

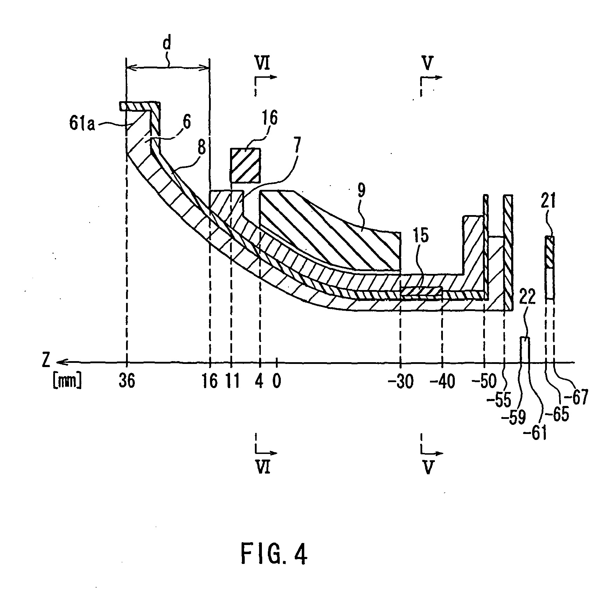

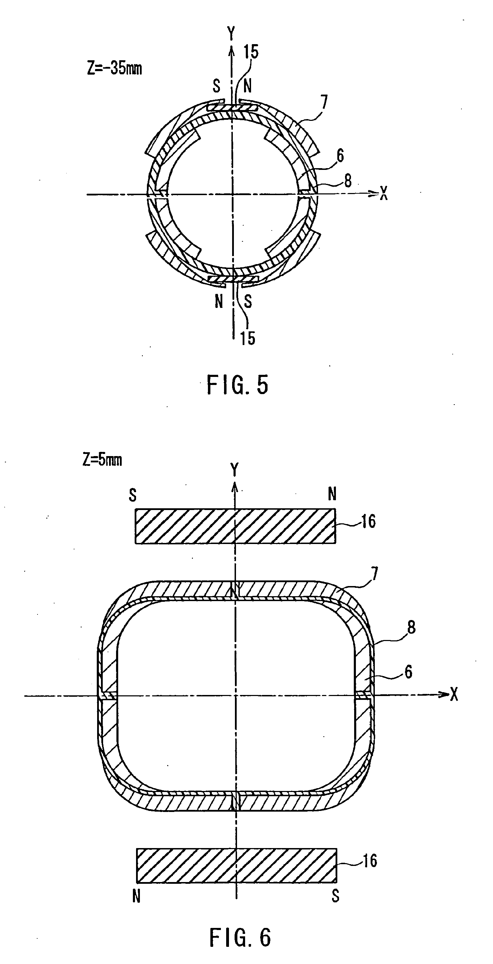

FIG. 2 is a schematic perspective view showing an outer appearance of the deflection yoke 4, and FIG. 3 is a rear view showing the deflection yoke 4 seen from a small-diameter side. FIG. 4 is a partial cross-sectional view taken along a vertical plane (YZ-plane) passing through the Z-axis of the deflection yoke 4 according to the above example. The cross-sectional shape on the YZ-plane of the deflection yoke 4 is substantially symmetrical with respect to the Z-axis, so that only the upper side of the Z-axis is shown in FIG. 4. FIG. 5 is a cross-sectional view of the deflection yoke 4 taken along a line V-V at a position of Z = -35 in FIG. 4. FIG. 6 is a cross-sectional view of the deflection yoke 4 taken along a line VI-VI at a position of Z = +5 mm in FIG. 4. In FIGS. 4, 5, and 6, members other than the deflection yoke 4 (e.g., the funnel 2) are omitted.

The deflection yoke 4 includes a saddle-type horizontal deflection coil 6 for applying a horizontal deflection magnetic field to the three electron beams to deflect the three electron beams in a horizontal direction, a vertical deflection coil 7 for applying a vertical deflection magnetic field to the three electron beams to deflect the three electron beams in a vertical direction, an insulating frame 8 for insulating the horizontal deflection coil 6 from the vertical deflection coil 7, and a ferrite core 9. Furthermore, the deflection yoke 4 includes a quadrupole magnet 15 on an electron gun side, a quadrupole magnet 16 on a screen side, a coma aberration correction coil 12, a YH correction coil 13, and a vertical auxiliary coil 14.

According to the present invention, the system in which a quadrupole magnetic field is added to a substantially uniform horizontal deflection magnetic field disclosed by JP 2003-297261 A was studied further, whereby the arrangement and shape of various constituent components were improved. This will be described in detail below using the above example.

In the color picture tube apparatus of the present invention, in the same way as in the color picture tube apparatus disclosed by JP 2003-297261 A, a substantially uniform horizontal deflection magnetic field distribution is formed by the horizontal deflection coil 6, three electron beam tracks are set to be substantially parallel to the Z-axis at a position (Z = -30 mm) of an end of the ferrite core 9 on the electron gun side in the Z-axis direction, and the convergence on the X-axis is realized with the quadrupole magnet 15 on the electron gun side and the quadrupole magnet 16 on the screen side.

The substantially uniform horizontal deflection magnetic field distribution will be described. Assuming that an X-axis coordinate value and a Y-axis coordinate value at a point on the Z-axis are respectively 0, a magnetic flux density $Bh$ $(x, z)$ of a Y-axis direction component of the horizontal deflection magnetic field is represented by the following Expression (1) with a displacement x in the X-axis direction from the Z-axis and a Z-axis coordinate z being variables.

$$Bh\,(x,\,z) = Bh_0(z) + Bh_2(z) \cdot x^2 \qquad\qquad (1)$$

In Expression (1), $Bh_0(z)$ represents a magnetic flux density of a Y-axis direction component of the horizontal deflection magnetic field on the Z-axis, which is the function of z. $Bh_2(z)$ is called a secondary distortion coefficient, which is also the function of z, and is a coefficient of $x^2$.

In the case where $Bh_2(z)=0$ irrespective of the value of z, $Bh(x, z)$ is determined by the value of z irrespective of the value of x. Such a horizontal deflection magnetic field distribution is considered to be completely uniform.

It is not easy to realize such a completely uniform magnetic field by designing a coil, and even if an attempt is made to realize a completely uniform magnetic field, actually, $Bh_2(z)$ has some component, albeit slight. According to the present invention, in the case of setting the maximum value of the magnetic flux density distribution $Bh_0(z)$ on the Z-axis to be 1, and the unit of x to be "mm", the magnetic field distribution that satisfies the following Expression (2) in at least 75% region of a length in the Z-axis direction of the horizontal deflection coil 6 is assumed to be substantially uniform.

$$-1 \times 10^{-4} \leq Bh_2(z) \leq 1 \times 10^{-4}\ (1/mm^2) \qquad\qquad (2)$$

As shown in FIG. 4, in the Z-axis direction, the horizontal deflection coil 6 is a saddle-type coil occupying a range of Z = -55 mm to +36 mm, and the vertical deflection coil 7 is a saddle-type coil occupying a range of Z = -50 mm to +16 mm. The ferrite core 9 occupies a range of Z = -30 mm to +4 mm.

As shown in FIG. 4, the quadrupole magnet 15 on the electron gun side is placed in the vicinity of the end of the ferrite core 9 on the electron gun side in the Z-axis direction. Specifically, the quadrupole magnet 15 on the electron gun side occupies a range of Z = -40 mm to -30 mm, which is on the electron gun 3 side from the position (Z = -30 mm) of the end of the ferrite core 9 on the electron gun side. As shown in FIG. 5, the quadrupole magnet 15 on the electron gun side is placed as a pair between the vertical deflection coil 7 and the insulating frame 8 so as to sandwich the neck 2a of the funnel 2 from upper and lower sides and to cross the YZ-plane. The quadrupole magnet 15 on the electron gun side is an iron-samarium magnet in a sheet shape with a thickness (Y-axis direction size) of 1.5 mm, an X-axis direction size of 15 mm, and a Z-axis direction size of 10 mm. Both ends in the X-axis direction of a pair of the quadrupole magnets 15 on the electron gun side are polarized as shown in FIG. 5, and apply a quadrupole magnetic field to the three electron beams in the funnel 2.

The following was found from various experiments: in the Z-axis direction, assuming that the vicinity of the end of the ferrite core 9 on the electron gun side is a base point (specifically, a position (Z = -40 mm) that is away from the end on the electron gun side of the ferrite core 9 to the electron gun side by 10 mm is a base point), a quadrupole magnetic field generator for generating a quadrupole magnetic field may be placed in a region from the base point to the phosphor screen.

The quadrupole magnet 16 on the screen side is placed between the ferrite core 9 and the phosphor screen in the Z-axis direction, as shown in FIG. 4. Specifically, the quadrupole magnet 16 on the screen side occupies a range of Z = +4 mm to +11 mm, which is on the phosphor screen side from a position (Z = +4 mm) of an end of the ferrite core 9 on the phosphor screen side. The quadrupole magnet 16 on the screen side is a sintered ferrite magnet in a rectangular solid shape with an X-axis direction size of 52 mm, a Y-axis direction size of 8.5 mm, and a Z-axis direction size of 7 mm, as shown in FIG. 6. The quadrupole magnet 16 on the screen side is placed as a pair so as to sandwich the insulating frame 8 from upper and lower sides and to cross the YZ-plane. Both ends in the X-axis direction of a pair of the quadrupole magnets 16 on the screen side are polarized as shown in FIG. 6, and apply a quadrupole magnetic field to the three electron beams in the funnel 2.

The quadrupole magnetic fields generated by the quadrupole magnet 15 on the electron gun side and the quadrupole magnet 16 on the screen side respectively have a horizontal distribution in which the magnetic flux density By of a vertical component thereof gradually weakens from a center portion toward both outer sides in the horizontal direction, in the same way as in the quadrupole magnetic field in JP 2003-297261 A shown in FIG. 16. Thus, these quadrupole magnetic fields have a horizontal focusing action of focusing the three electron beams in the horizontal direction even when the three electron beams reach any portion of the phosphor screen, and the horizontal focusing action gradually weakens from the center to outer circumferential ends of the phosphor screen in the horizontal direction. This enables the convergence on the horizontal axis.

Furthermore, owing to the above arrangement, the quadrupole magnet 16 on the screen side also has a function of correcting the pincushion distortion of rasters in upper and lower portions in addition to the convergence on the horizontal axis.

The number of the quadrupole magnetic field generators for generating a quadrupole magnetic field is not required to be two as in the present embodiment, and may be one or three or more. Furthermore, the quadrupole magnetic field generator may be a coil instead of a magnet. It is preferable that the quadrupole magnetic field generator is a magnet, because the supply of power is not necessary, whereby power consumption can be suppressed.

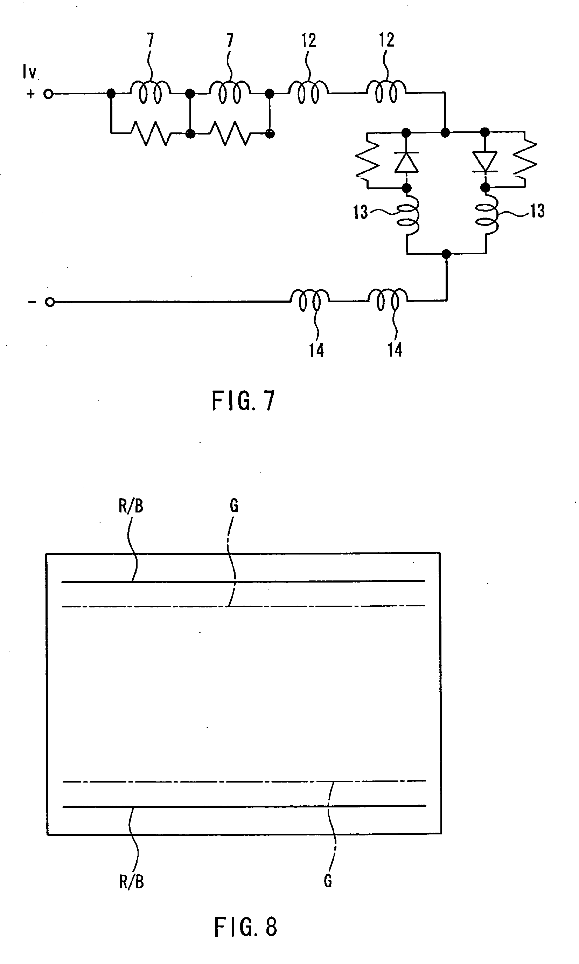

Next, the coma aberration correction coil 12, the YH correction coil 13, and the vertical auxiliary coil 14 will be described. FIG. 7 is a circuit diagram of the vertical deflection coils 7, the coma aberration correction coils 12, the YH correction coils 13, and the vertical auxiliary coils 14. The vertical deflection coils 7 placed one on each side of the YZ-plane are connected in series with each other with parallel resistors of 1 kΩ for damping, and a pair of the coma correction coils 12 are connected in series with the vertical deflection coils 7. Furthermore, a pair of the YH correction coils 13 respectively connected to diodes with opposite polarities are connected in parallel with each other to constitute a YH correction circuit, and a pair of the vertical auxiliary coils 14 are connected in series with the YH correction circuit.

The coma aberration correction coil 12 and the YH correction coil 13 are wound around a core 21 in a U-shape made of a magnetic material, and placed one on each side of the XZ-plane with the neck 21a of the funnel 2 interposed in the vertical direction as shown in FIG. 3. The U-shaped core 21 is placed in a range of Z = —67 mm to —65 mm on the electron gun side from the ferrite core 9 in the Z-axis direction as shown in FIG. 4.

The coma aberration correction coil 12 generates a magnetic field in the same direction as that of the vertical deflection magnetic field generated by the vertical deflection coil 7, thereby correcting the misconvergence (vertical coma aberration) of VCR shown in FIG. 8.

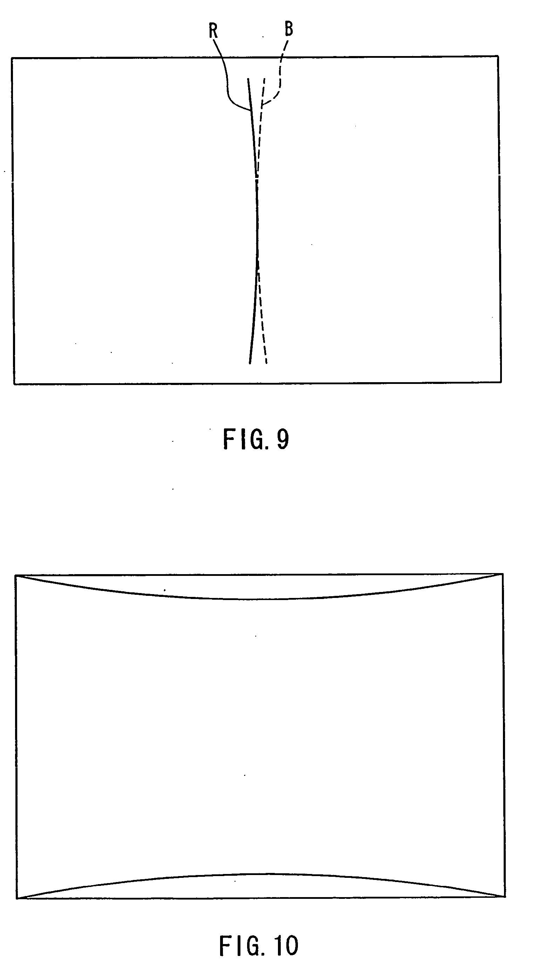

The YH correction coil 13 uses a rectifying function of a diode to generate a quadrupole magnetic field with a predetermined polarity irrespective of the deflection direction, which is synchronized with the vertical deflection magnetic field and has a variation in intensity, thereby correcting the misconvergence of YH shown in FIG. 9.

The vertical auxiliary coil 14 is wound around an I-shaped core 22 in a columnar shape (outer diameter 5 mm x length 20 mm) made of a magnetic material, and placed one on each side of the YZ-plane with the neck 2a of the funnel 2 interposed in the horizontal direction as shown in FIG. 3. The I-shaped core 22 is placed in a range of Z = -61 mm to -59 mm on the electron gun side from the ferrite core 9 in the Z-axis direction as shown in FIG. 4. The vertical auxiliary coil 14 generates a vertical auxiliary magnetic field in the same direction as that of the vertical deflection magnetic field generated by the vertical deflection coil 7. The vertical auxiliary coil 14 is wound around the I-shaped core 22 made of a magnetic material, whereby the vertical deflection power can be reduced.

In the Z-axis direction, assuming that deflecting the electron beams emitted from the electron gun in the vertical direction before the electron beams reach a region occupied by the vertical deflection coil 7 is called vertical preliminary deflection, the coma aberration correction coil 12 and the vertical auxiliary coil 14 subject the electron beams to the vertical preliminary deflection.

Next, how the present invention has solved the problem of the system in which a quadrupole magnetic field is added to a substantially uniform horizontal deflection magnetic field will be described in detail below.

In the case of realizing a system including a combination of a substantially uniform horizontal deflection magnetic field and a quadrupole magnetic field, the misconvergence of PQH occurs in which red (R) is shifted to the right side with respect to blue (B) as shown in FIG. 17. The reason for this will be described.

As the deflection amount in the vertical direction of the three electron beams increases, electron beams on both outer sides are deflected in a direction approaching each other due to each quadrupole magnetic field of the quadrupole magnet 15 on the electron gun side and the quadrupole magnet 16 on the screen side. More specifically, the quadrupole magnet 15 on the electron gun side and the quadrupole magnet 16 on the screen side increase the misconvergence of YH shown in FIG. 9.

The YH correction coil 13 generates a quadrupole magnetic field synchronized with a vertical deflection magnetic field to cancel the above-mentioned quadrupole magnetic fields generated by the quadrupole magnets 15, 16, whereby the misconvergence of YH is corrected. However, the track length of an electron beam reaching a diagonal axis direction end portion is longer than that of an electron beam reaching a Y-axis direction end portion of the screen. Therefore, when the misconvergence of YH shown in FIG. 9 is corrected appropriately on the Y-axis, excessive correction is made in diagonal axis direction end portions, with the result that the misconvergence of PQH shown in FIG. 17 occurs, in which red (R) is shifted to the right side with respect to blue (B).

In order to suppress the misconvergence of PQH, the misconvergence of YH only needs to be decreased under the condition of no correction by the YH correction coil 13, by increasing a barrel magnetic field of a vertical deflection magnetic field. This can decrease the correction amount by the YH correction coil 13, so that the misconvergence of PQH can be suppressed. However, according to this method, the barrel magnetic field of the vertical deflection magnetic field is increased, which increases the pincushion distortion of rasters in upper and lower portions shown in FIG. 10.

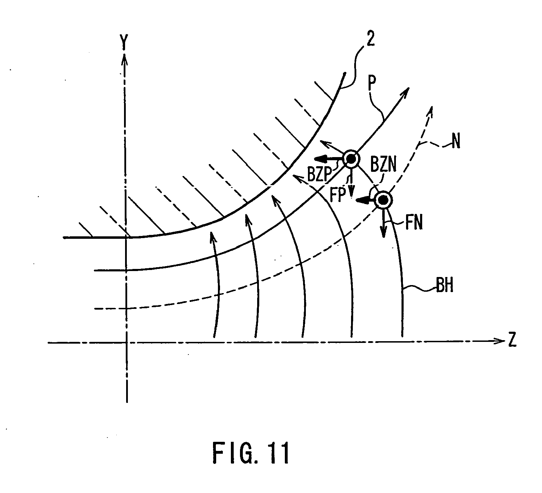

According to the present invention, as one of the means for correcting the pincushion distortion of rasters in upper and lower portions without increasing the correction amount by the YH correction coil 13, a vertical preliminary deflection magnetic field is generated by the vertical auxiliary coil 14. The principle of correcting the pincushion distortion of rasters in upper and lower portions by the vertical preliminary deflection magnetic field will be described with reference to FIG. 11.

In FIG. 11, P represents an electron beam track directed to a screen diagonal axis end when a vertical preliminary deflection magnetic field is applied, and N represents an electron beam track directed to a screen diagonal axis end in the absence of the vertical preliminary deflection magnetic field. In FIG. 11, although the electron beam tracks P, N projected on the YZ-plane are shown, the electron beams traveling along the electron beam tracks P, N actually have a velocity component in the direction (positive direction of an X-axis) from the front side to the reverse side of a drawing sheet.

BH represents a horizontal deflection magnetic flux, BZP represents a Z-axis direction component of the horizontal deflection magnetic flux BH crossing the electron beam track P, and BZN represents a Z-axis direction component of the horizontal deflection magnetic flux BH crossing the electron beam track N.

When a vertical preliminary deflection magnetic field is applied, the deflection center in the vertical direction moves to the electron gun side with respect to the deflection center in the horizontal direction. Consequently, the displacement amount in the vertical direction of an electron beam track passing through the deflection yoke increases, and the electron beam track changes from N to P. The electron beams traveling along the electron beam tracks P, N respectively receive Lorentz forces FP, FN in a negative direction in the Y-axis direction from the Z-axis direction components BZP, BZN of the horizontal deflection magnetic flux BH. Herein, BZP > BZN is satisfied regarding the Z-axis direction components of the horizontal deflection magnetic flux BH, so that FP > FN is satisfied regarding the Lorentz forces.

Thus, the Lorentz force in the direction toward the X-axis acts on the electron beam directed to the screen diagonal axis end due to the horizontal deflection magnetic field, and this Lorentz force corrects the pincushion distortion of rasters in upper and lower portions shown in FIG. 10. Then, as this Lorentz force is larger, the effect of correcting the pincushion distortion of rasters in upper and lower portions increases. Thus, the vertical preliminary deflection contributes to the correction of the pincushion distortion of rasters in upper and lower portions.

As described above, although the coma aberration correction coil 12 generates a vertical preliminary deflection magnetic field, basically, the coma aberration correction coil 12 mainly corrects VCR. Under the condition that the VCR has been corrected optimally, in the case where it is further necessary to correct the pincushion distortion of rasters in upper and lower portions, a vertical preliminary deflection magnetic field should be generated by the vertical auxiliary coil 14.

According to the present invention, as another means for correcting the pincushion distortion of rasters in upper and lower portions without increasing the correction amount by the YH correction coil 13, as shown in FIG. 4, it is preferable to enlarge a Z-axis direction distance d between the end of the horizontal deflection coil 6 on the screen side and the end of the vertical deflection coil 7 on the screen side, compared with the conventional example. Because of this, the deflection center in the horizontal direction moves to the screen side. Thus, the state is obtained in which the deflection center in the vertical direction has moved to the electron gun side relative to the deflection center in the horizontal direction, and owing to the same principle as that in the case of applying a vertical preliminary deflection magnetic field, the pincushion distortion of rasters in upper and lower portions can be corrected.

In general, in terms of the configuration of a saddle coil, it is necessary to place the vertical deflection coil 7 at a required insulation distance from a large-diameter side (screen side) bend portion 61a of the horizontal deflection coil 6. Therefore, the above distance d needs to be 8 mm or more, which corresponds to the sum of the Z-axis direction thickness of 7 mm of the large-diameter side bend portion 61a of the horizontal deflection coil 6 and the thickness of 1 mm of the insulating frame 8. Conventionally, the distance d is about 8 to 10 mm.

In contrast, according to the present invention, it is preferable that the distance d is 15 mm or more, in particular, 20 mm or more. In the example, d was set to be 20 mm. Because of this, the pincushion distortion of rasters in upper and lower portions can be corrected without increasing the correction amount by the YH correction coil 13 on the same principle as that of applying a vertical preliminary deflection magnetic field.

Although the upper limit of the distance d is not particularly limited, it is preferably 30 mm or less. When the distance d is too large, the following problems may arise. The winding length of the horizontal deflection coil 6 becomes extremely large to increase the weight of the coil remarkably, which results in an increase in cost. Alternatively, the winding length of the vertical deflection coil 7 becomes extremely small, which makes it difficult to adjust a magnetic field distribution of a vertical deflection magnetic field for obtaining required vertical deflection characteristics.

As described above, in order to suppress the misconvergence of PQH, it is effective to combine the enhancement of a barrel magnetic field of a vertical deflection magnetic field, with the correction of the pincushion distortion of rasters in upper and lower portions without increasing the correction amount by the YH correction coil 13. However, even with this, the misconvergence of PQH cannot be eliminated sufficiently. For this purpose, according to the present invention, the winding arrangement of the horizontal deflection coil 6 is devised.

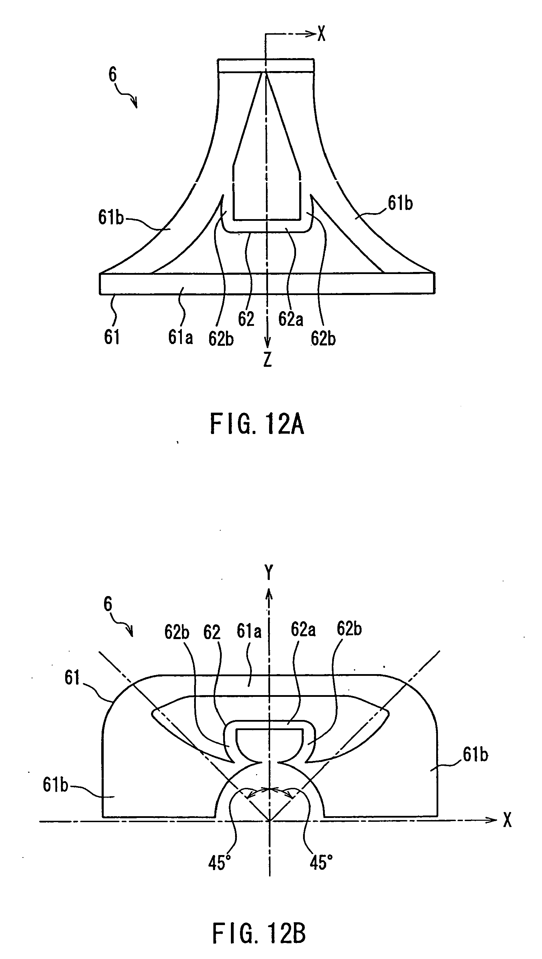

FIG. 12A is a plan view showing the winding arrangement of the horizontal deflection coil 6, and FIG. 12B is a front view thereof. Since the winding arrangement of the horizontal deflection coil 6 is symmetrical with respect to the XZ-plane, only the winding on the positive side of the Y-axis with respect to the XZ-plane is shown in FIG. 12B.

The horizontal deflection coil 6 in the present invention has a first coil 61 and a second coil 62. In FIG. 12A, the winding of the second coil 62 is placed on an inner circumferential side from the winding of the first coil 61.

The first and second coils 61, 62 respectively have large-diameter side bend portions 61a, 62a that traverse the Y-axis when seen along the Z-axis as shown in FIG. 12B and do not substantially contribute to the deflection, and useful portions 61b, 62b that are contiguous to both ends of the large-diameter side bend portions 61a, 62a and contribute to the deflection. The large-diameter side bend portion 61a of the first coil 61 is placed on the phosphor screen side with respect to the large-diameter side bend portion 62a of the second coil 62 in the Z-axis direction. The first coil 61 and the second coil 62 are connected in series with each other, and the winding of the horizontal deflection coil 6 is wound so that horizontal deflection currents in the same direction when seen along the Z-axis flow in the large-diameter side bend portion 61a of the first coil 61 and the large-diameter side bend portion 62a of the second coil 62 .

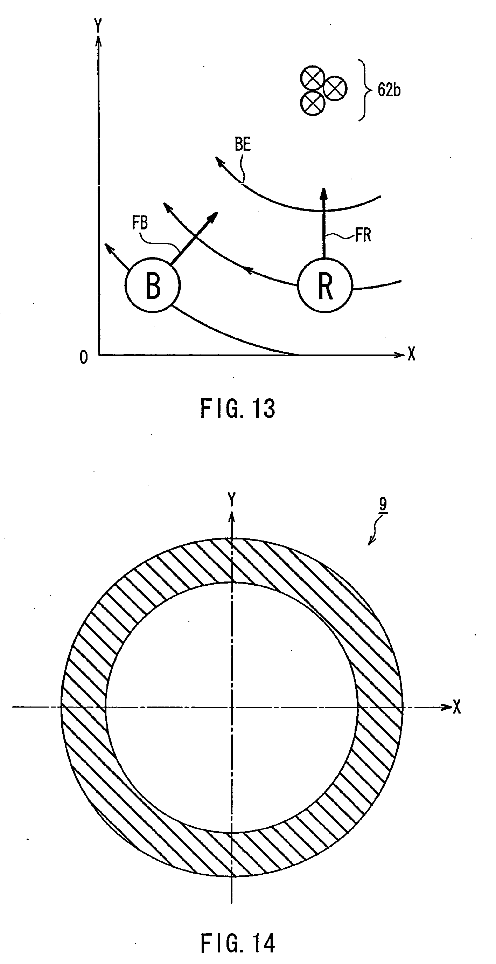

As shown in FIG. 12B, when seen along the Z-axis, the useful portion 62b of the second coil 62 is placed in a range of $\pm 45°$ from the Y-axis with respect to the Z-axis. Because of this, the misconvergence of PQH is corrected. This will be described using FIG. 13. FIG. 13 shows the action of a magnetic flux BE generated by the useful portion 62b of the second coil 62 with respect to electron beams B, R corresponding to blue and red on both outer sides, when the three electron beams are deflected to an upper-right corner portion of the screen. As shown in FIG. 13, the electron beams B, R receive Lorentz forces FB and FR in indicated directions due to the magnetic flux BE. As is apparent from the difference in an arrow direction between the Lorentz forces FB and FR, the electron beam B close to the Y-axis receives a relatively large force in a right direction, compared with the electron beam R. Consequently, the misconvergence of PQH in which red is shifted to the right side can be corrected.

Thus, by placing the useful portion 62b of the second coil 62 in a range of $\pm 45°$ from the Y-axis with respect to the Z-axis, the misconvergence of PQH can be corrected.

When the winding placed in a range of $\pm 45°$ from the Y-axis with respect to the Z-axis extends to the same position as that of the end of the large-diameter side bend portion 61a of the first coil 61 on the screen side in the Z-axis direction, the pincushion distortion of rasters in upper and lower portions increases. The following was confirmed from various experiments. When the winding placed in a range of $\pm 45°$ from the Y-axis with respect to the Z-axis is placed further on the phosphor screen side from the position (Z = + 14 mm in the example) that is away from the end (Z = +4 mm in the example) on the phosphor screen side of the ferrite core 9 to the phosphor screen side by 10 mm, the pincushion distortion of rasters in upper and lower portions remarkably increases. Thus, it is preferable that the large-diameter side bend portion 62a of the second coil 62 is placed on the electron gun side from the position that is away from the end on the phosphor screen side of the ferrite core 9 to the phosphor screen side by 10 mm, because the increase in the pincushion distortion of rasters in upper and lower portions can be suppressed.

In the example, the horizontal deflection coil 6 was produced by winding a wire by 53 turns from the inner circumferential side to the outer circumferential side. The end on the screen side of the winding of the first turn on the winding start side was allowed to cross the YZ-plane at the position of Z = +4 mm, whereby the large-diameter side bend portion 62a was configured. The second coil 62 was composed of the winding of 5 turns on the winding start side, and the large-diameter side bend portion 62a was placed in a range of Z = +4 mm to + 7 mm in the Z-axis direction. The useful portion 62b of the second coil 62 composed of the winding of 5 turns was placed in a range of $\pm 45°$ from the Y-axis with respect to the Z-axis. The first coil 61 was composed of the winding of subsequent 48 turns, and the large-diameter side bend portion 61a was placed in a range of Z = +29 mm to +36 mm in the Z-axis direction. The useful portion 61b of the first coil 61 composed of the winding of 48 turns was placed outside a range of $\pm 45°$ from the Y-axis with respect to the Z-axis.

The cross-sectional shape of the outer circumferential surface of the funnel 2 perpendicular to the Z-axis gradually changes from a substantially circular shape to a substantially rectangular shape from the electron gun 3 side to the panel 1 side. When the cross-sectional shape of the ferrite core 9 perpendicular to the Z-axis is allowed to correspond to the change in the cross-sectional shape of the outer circumferential surface of the funnel 2, the constituent members of the deflection yoke 4 including the ferrite core 9 can be approximated to the funnel 2 further, so that a deflection power can be reduced. Thus, conventionally, the cross-sectional shape of the ferrite core 9 perpendicular to the Z-axis has been set to be substantially similar to the cross-sectional shape of the funnel 2. More specifically, conventionally, as the ferrite core, a so-called "angular core" has been used, in which the cross-sectional shape on the small-diameter side (electron gun side) is a circular shape, and the cross-sectional shape on the large-diameter side (screen side) is a substantially rectangular shape as shown in FIG. 15. In contrast, according to the present invention, as shown in FIG. 14, a so-called "round core" is preferably used, in which an inner surface and an outer surface have a substantially circular shape with respect to the Z-axis in the XY cross-section, irrespective of the position in the Z-axis direction. This is advantageous in terms of cost, because the productivity of the ferrite core is enhanced. In the example, the round core also was used.

The applicable field of the color picture tube apparatus of the present invention is not particularly limited, and can be applied in a wide range to a television, a computer display, or the like.

**EP 1 641 019 A1**

**Claims**

1. A color picture tube apparatus comprising:

a color picture tube including an envelope composed of a front panel in which a phosphor screen is formed on an inner surface and a funnel, an electron gun provided in a neck of the funnel; and

a deflection yoke mounted on an outer circumferential surface of the funnel, for applying a horizontal deflection magnetic field and a vertical deflection magnetic field to three electron beams emitted in an in-line shape from the electron gun to deflect the three electron beams in horizontal and vertical directions,

wherein the deflection yoke includes a ferrite core, a horizontal deflection coil for generating the horizontal deflection magnetic field, a vertical deflection coil for generating the vertical deflection magnetic field, and an insulating frame for insulating the horizontal deflection coil from the vertical deflection coil,

the horizontal deflection magnetic field has a substantially uniform magnetic field distribution,

tracks of the three electron beams are substantially parallel to a tube axis at a position of an end of the ferrite core on an electron gun side in a tube axis direction,

a quadrupole magnetic field generator for generating a quadrupole magnetic field that acts on the three electron beams is provided in a region from a vicinity of the end of the ferrite core on the electron gun side to the phosphor screen,

the quadrupole magnetic field has a horizontal focusing action of focusing the three electron beams in a horizontal direction even in a case where the three electron beams reach any place of the phosphor screen, and has a magnetic field distribution in which the horizontal focusing action gradually weakens as the three electron beams are deflected from a center to an outer circumferential end of the phosphor screen in the horizontal direction,

a pair of coma aberration correction coils for correcting coma aberration, a pair of YH correction coils for correcting YH, and a pair of magnetic substance cores around which the coma aberration correction coils and the YH correction coils are wound are placed at a position on the electron gun side from the ferrite core in the tube axis direction and sandwich the neck in the vertical direction,

a pair of vertical auxiliary coils for generating a magnetic field in the same direction as that of the vertical deflection magnetic field are placed at a position on the electron gun side from the ferrite core in the tube axis direction and sandwich the neck in the horizontal direction,

the horizontal deflection coil includes a first coil, and a second coil composed of a winding placed on an inner circumferential side from a winding of the first coil and having a useful portion that contributes to deflection in a range of $\pm 45°$ from a vertical axis with respect to the tube axis,

a large-diameter side bend portion of the second coil that traverses the vertical axis is placed on the electron gun side from a position that is away from the end on the phosphor screen side of the ferrite core to the phosphor screen side by 10 mm in the tube axis direction, and

the first coil and the second coil are connected in series with each other, and horizontal deflection currents in the same direction seen along the tube axis flow in a bend portion of the first coil and the bend portion of the second coil.

2. The color picture tube apparatus according to claim 1, wherein the vertical auxiliary coil is wound around a magnetic substance core.

3. The color picture tube apparatus according to claim 1 or 2, wherein the end of the horizontal deflection coil on the screen side and the end of the vertical deflection coil on the screen side are away from each other by 15 mm or more in the tube axis direction.

4. The color picture tube apparatus according to any one of claims 1 to 3, comprising a plurality of the quadrupole magnetic field generators, wherein at least one of the quadrupole magnetic field generators is placed in a vicinity of the end of the ferrite core on the electron gun side, and at least another one of the quadrupole magnetic field generators is placed between the ferrite core and the phosphor screen.

5. The color picture tube apparatus according to any one of claims 1 to 4, wherein, in a cross-section vertical to the tube axis of the ferrite core, an inner surface and an outer surface of the ferrite core have a substantially circular shape with respect to the tube axis, irrespective of a position in the tube axis direction.

6. The color picture tube apparatus according to any one of claims 1 to 5, wherein the quadrupole magnetic field generator is composed of magnets.

FIG. 1

FIG. 2

FIG. 3

FIG. 4

Z=−35mm

FIG. 5

Z=5mm

FIG. 6

FIG. 7

FIG. 8

FIG. 9

FIG. 10

FIG. 11

**FIG. 12A**

**FIG. 12B**

FIG. 13

FIG. 14

FIG. 15

FIG. 16
PRIOR ART

FIG. 17

**European Patent Office**

**EUROPEAN SEARCH REPORT**

Application Number

EP 05 25 5303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 069 763 A (MATSUSHITA ELECTRIC INDUSTRIAL CO., LTD) 17 January 2001 (2001-01-17) * page 4, paragraph 19-25 * ----- | 1-6 | H01J29/70 H01J29/76 H04N9/28 |
| A | EP 1 063 674 A (KABUSHIKI KAISHA TOSHIBA) 27 December 2000 (2000-12-27) * page 6, paragraph 25 - page 7, paragraph 29 * * page 8, paragraph 44 * * page 10, paragraph 60-62 * ----- | 1-6 | |
| A | EP 1 292 155 A (MATSUSHITA ELECTRIC INDUSTRIAL CO., LTD) 12 March 2003 (2003-03-12) * page 5, paragraph 30 - page 6, paragraph 44 * ----- | 1-6 | |
| A | US 2001/008368 A1 (NAKAJIMA KOJI) 19 July 2001 (2001-07-19) * page 3, paragraph 39 - page 4, paragraph 53 * ----- | 1-6 | TECHNICAL FIELDS SEARCHED (IPC) H01J H04N |
| A | EP 1 026 900 A (KABUSHIKI KAISHA TOSHIBA) 9 August 2000 (2000-08-09) * page 4, paragraph 23 - page 7, paragraph 45 * ----- | 1-6 | |
| A | US 2003/038580 A1 (CARPINELLI JOSEPH MICHAEL ET AL) 27 February 2003 (2003-02-27) * page 5, paragraph 57 - page 6, paragraph 62 * ----- | 1-6 | |

The present search report has been drawn up for all claims

| Place of search | Date of completion of the search | Examiner |
|---|---|---|
| Munich | 2 January 2006 | Gols, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 25 5303

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2006

| Patent document cited in search report | | Publication date | Patent family member(s) | | Publication date |
|---|---|---|---|---|---|
| EP 1069763 | A | 17-01-2001 | CN | 1280380 A | 17-01-2001 |
| | | | JP | 2001023541 A | 26-01-2001 |
| | | | TW | 460895 B | 21-10-2001 |
| | | | US | 6304044 B1 | 16-10-2001 |
| EP 1063674 | A | 27-12-2000 | CN | 1299514 A | 13-06-2001 |
| | | | JP | 2000251761 A | 14-09-2000 |
| | | | WO | 0039833 A1 | 06-07-2000 |
| | | | TW | 455904 B | 21-09-2001 |
| | | | US | 6380667 B1 | 30-04-2002 |
| EP 1292155 | A | 12-03-2003 | CN | 1409359 A | 09-04-2003 |
| | | | US | 2003057893 A1 | 27-03-2003 |
| US 2001008368 | A1 | 19-07-2001 | JP | 2001196012 A | 19-07-2001 |
| | | | TW | 487945 B | 21-05-2002 |
| EP 1026900 | A | 09-08-2000 | JP | 2000228156 A | 15-08-2000 |
| | | | US | 6396206 B1 | 28-05-2002 |
| US 2003038580 | A1 | 27-02-2003 | NONE | | |

EPO FORM P0459

For more details about this annex : see Official Journal of the European Patent Office, No. 12/82